Europäisches Patentamt

(19) European Patent Office

Office européen des brevets

(11) Publication number: **0 235 442**
**B1**

(12) **EUROPEAN PATENT SPECIFICATION**

(45) Date of publication of the patent specification:
13.06.90

(21) Application number: **86308407.5**

(22) Date of filing: **29.10.86**

(51) Int. Cl.⁵: **E06B 3/96**

(54) A building frame assembly and a method of manufacturing such an assembly.

(30) Priority: **05.03.86 GB 8605401**

(43) Date of publication of application:
**09.09.87 Bulletin 87/37**

(45) Publication of the grant of the patent:
**13.06.90 Bulletin 90/24**

(84) Designated Contracting States:
**AT BE CH DE FR GB LI NL SE**

(56) References cited:
**DE-A- 1 659 436**
**DE-A- 1 937 196**
**DE-A- 2 042 924**
**FR-A- 2 346 546**
**GB-A- 2 072 298**
**GB-A- 2 077 337**
**LU-A- 59 178**

(73) Proprietor: **BLACKNELL BUILDING PRODUCTS
LIMITED, 25 Westmead, Farnborough Hampshire
GU 14 7LB(GB)**

(72) Inventor: **Balkwill, Geoffrey Leonard, 121 Ringwood
Road, Verwood Dorset(GB)**

(74) Representative: **Walters, Frederick James et al,
Urquhart-Dykes & Lord 91 Wimpole Street, London
W1M 8AH(GB)**

ACTORUM AG

## Description

This invention relates to a building frame assembly and to a method of manufacturing such an assembly and is primarily concerned with assemblies which are manufactured from elongate members jointed together to form a corner and in which each elongate member comprises a sleeve of thermoplastics material housing a relatively rigid reinforcement. The invention was primarily developed for the assembly of window or door frames although it may be applied with advantage in the construction of other types of building frame assemblies where it is desirable that the rigid reinforcement of the jointed assembly has a protective and/or aesthetically pleasing surface provided by a thermoplastics skin.

It is well known to manufacture door or window frame assemblies from lengths of timber enclosed within an extruded thermoplastics sleeve and to join the ends of such reinforced members to construct the door or window frame. However, experience has shown that difficulty can be experienced in effecting a strong joint between the members in a simple and economic manner.

A conventional technique for jointing the two elongate members is by use of an injection moulded hollow corner piece which is spigoted into complementary sockets formed in the ends of the elongate members by extending the plastics sleeves of those members beyond the timber reinforcement. The spigots of the corner piece are secured in their respective sockets in the elongate members by use of a solvent adhesive and thereafter the corner piece is injected with a plastics foaming material (with the intention of filling the corner piece and providing a protective barrier to the timber). In general this technique has proved to be labour intensive, lengthly and inconvenient in the handling and application of the solvent adhesive and foam filling material. Furthermore, there may be some doubt whether the foam filling material is applied efficiently to fill the hollow corner and thereby leave voids where the corner may be without reinforcement and permit the ingress of moisture to the timber.

A further prior proposal is disclosed in our British Patent No. 2 072 298 in which each elongate member is again provided with a socket at its end which is to be jointed and which socket is formed by the thermoplastics sleeve extending beyond the timber. Into this socket is located an injection moulded thermoplastics connecting member providing a relatively large surface area over which the member is to be butt jointed in appropriate angular disposition to a similar member by plastics welding. Although this latter proposal provides a simple and easily manufactured joint which can be fully sealed by welding there is the disadvantage that the thermoplastics material of the extruded sleeve and that of the injection moulded connector are usually incompatible (in the sense that they may not easily be welded together). Generally therefore some compromise has to be made to the desirable welding characteristics for the respective materials to permit them to be welded together.

Still further prior proposals for jointing hollow plastics elongate members or such members having rigid reinforcement (for example, lengths of timber therein) to form a building frame assembly are disclosed in Patent Specifications DE-A 1 659 436, DE-A 2 042 924 and LU-A 59 179. These latter disclosures include the location of plastics sleeves or sleeve-like components within the ends of the plastics elongate members so that an end of one elongate member and the sleeve which it carries can be butt-welded to the end of another elongate member and the sleeve which it carries to form a corner joint. While the use of such inner plastics sleeves provides strengthening for the joint it is not always possible to ensure that water cannot enter the elongate members (for example, through a poorly formed weld) and possible degrade such reinforcement as may be provided; furthermore difficulties can be experienced in alleviating relative displacement between the sleeves and the elongate members within which they are located.

It is an object of the present invention to provide a building frame assembly and a method of manufacturing such an assembly by which the disadvantages of the aforementioned prior proposals may be alleviated.

According to the present invention there is provided a building frame assembly having two elongate members which are jointed together at their ends by a butt weld and in a plane whereby the said members are maintained in a predetermined angular relationship, each said member comprising a thermoplastics outer sleeve and a reinforcement in said outer sleeve, the outer sleeve extending beyond the reinforcement at said end to provide a socket, a thermoplastics inner sleeve located in said socket, said inner and outer sleeves having substantially coplanar end faces at the said end of their respective elongate member, and the butt weld being effected between the end faces of the thermoplastics sleeves of one member which oppose the end faces of the thermoplastics sleeves of the other member, characterised in that a layer of settable material is provided in the bottom of each socket to seal the end of the reinforcement in that socket and said settable material additionally serves to retain the inner sleeve in its respective socket.

Further according to the present invention there is provided a method of manufacturing a building frame assembly which comprises forming each of two elongate members by locating a reinforcement in a thermoplastics outer sleeve with an end of the outer sleeve extending beyond the reinforcement to form a socket; locating in the socket a thermoplastics inner sleeve; cutting the inner and outer sleeves to provide end faces thereon which are substantially coplanar and lie in a plane consistent with a predetermined angular relationship which is to be formed between the two members in the assembly, and welding the end faces of one member in abutting relationship with the end faces of the other member and with the two members in said angular relationship, characterised by providing in the bottom of the socket of each elongate member a layer of settable material to seal the end of the reinforcement in that socket and inserting the inner sleeve into that socket for said inner sleeve to engage the settable material and be retained thereby in the respective socket.

By the present invention it is envisaged that the two members which are to be jointed together in the construction of the building assembly will each have its outer thermoplastics sleeve extending beyond its reinforcement to form a socket and into this socket is located and secured, an inner thermoplastics sleeve so that these two sleeves can then be cut or mitred to provide appropriately angled and coplanar end faces for its elongate member. These coplanar end faces of the two elongate members may easily be heated and welded together in opposing relationship to form a butt joint between the two members. This has the advantage that the provision of the inner sleeve can form an end face with a relatively large surface area for an efficient and strong welded joint. Furthermore, the inner sleeve can be, and is preferably, of the same thermoplastics material as that from which the outer sleeve is formed so that when two similar elongate members are jointed together the butt weld can be formed utilising the most efficient characteristics of a common plastics material. Preferably the inner sleeve member is formed by extrusion so that it can simply be cut to length for insertion into the socket of its elongate member.

The reinforcement of the elongate members is preferably rigid and formed of timber although it will be appreciated that other reinforcement may be employed such as an aluminium or plastics foam core, or what may be regarded as compacted waste material. Usually the reinforcement will have a profile which presents longitudinally extending rebates or recesses on the elongate member and the outer plastics sleeve is extruded on to the reinforcement to follow the rebates or recesses in conventional manner.

The use of the settable sealant material as proposed by the present invention is particularly advantageous where the reinforcement is timber so that the sealant may protect the timber against the ingress of water or moisture should the corner joint be damaged.

Preferably the external profile of the inner sleeve corresponds to the internal profile of the outer sleeve so that the inner sleeve is received in the socket formed by the outer sleeve as a close, substantially, complementary fit. Preferably the inner sleeve is inserted into the socket of its elongate member to abut the reinforcement of that member and thereby be retained against displacement further into the outer sleeve.

In the majority of assemblies, particularly for door and window frames, the joint formed between the two elongate members will be angled at 90° so that the coplanar end faces will be mitred in a 45° plane to their respective elongate members. However, it is to be realised that the present invention can be applied with advantage to the formation of joints which are angled other than at 90°, for example in the construction of pentagonal or hexagonal window frames.

One embodiment of a building frame assembly manufactured in accordance with the method of the present invention will now be described, by way of example only, with reference to the accompanying illustrative drawings in which:

Figure 1 is a perspective view of the end of an elongate member with its socket about to receive an inner sleeve, and

Figure 2 is a longitudinal section of a corner joint of the frame assembly formed from two elongate members similar to that shown in Figure 1.

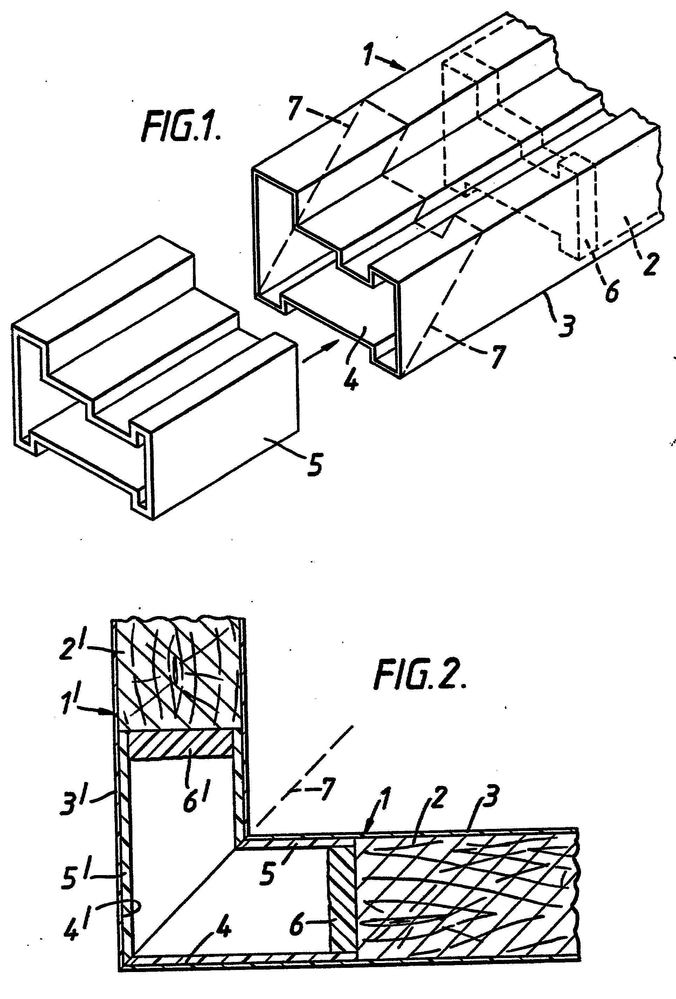

The elongate member 1 (which is in the course of construction as shown in Figure 1) has a wood core reinforcement 2 which is profiled with longitudinally extending rebates and recesses to conform substantially to the profile required for the building frame assembly; such profiling may be achieved in conventional manner and in the present example the building frame assembly is conveniently regarded as a window frame. The length of wood 2 is received within a thermoplastics sleeve 3 which is extruded on to the wood in conventional manner to generally follow the profile of the core and present an accurately defined outer profile to the elongate member 1. The thermoplastics material of the sleeve 3 is preferably unplasticised polyvinyl chloride. The wood core 2 is positioned longitudinally within the sleeve 3 (conveniently by longitudinal displacement of the wood relative to the sleeve following appropriate cutting to length of the respective components) so that the sleeve 3 extends beyond the wood 2 to form a socket 4 in the end of the member 1.

To be located in the socket 4 is an inner thermoplastics sleeve 5 having an external profile which substantially corresponds to the internal profile of the socket 4. The inner sleeve 5 which is preferably extruded and cut to length, is of a material which is compatible for welding with the material of the outer sleeve 3.

Preferably the sleeves 3 and 5 are of the same thermoplastics. Usually the sleeve 5 will have a wall thickness substantially greater than the wall thickness of the sleeve 3.

Prior to insertion of the sleeve 5 into the socket 4, a layer of settable material 6 is located in the bottom of the socket 4 to cover the end of the wood 2. The settable layer 6 is a sealant and, preferably, an adhesive which may be applied in liquid form but is quick setting in the bottom of the socket. Examples of appropriate materials for the layer 6 are polyurethane elastomers hot melt adhesives or RTV (room temperature vulcanisable) silicone rubbers. Prior to the layer 6 setting, the sleeve 5 is pushed as a close sliding fit into the socket 4 until it abuts the wood core 2 and its inner end dips into the layer 6 as shown in Figure 2. In this latter condition the outer end of the sleeve may project from the socket 4.

As the layer 6 sets it provides a barrier to alleviate the ingress of water or moisture from the socket 4 into the end of the wood 2 and also serves to hold the sleeve 5 within the socket 4 during mitre cutting of the elongate member 1 as will be described.

The member 1 is to form part of a 90° joint of a window frame and for this the outer and inner sleeves are cut or mitred simultaneously in a plane 7 which extends at 45° to the longitudinal extent of the member 1. During mitre cutting the inner sleeve 5 should be firmly retained relative to the outer sleeve 3 and this retention may be achieved by having the sleeve 5 as an interference fit within the sleeve 4 and/or by the adhesive or bonding effect of the layer 6.

Following the mitre cutting the elongate member 1 is jointed to a second elongate member 1' which is similarly formed to the member 1 (in Figure 2 the parts of the member 1' similar to those of the member 1 are indicated by the same dashed references). The two members 1 and 1' are to be welded together at opposing end faces in the plane 7 of the right angle joint shown in Figure 2. To achieve this welding, the 45° end faces of the inner and outer sleeves are subjected to a heated platen (not shown) so that the thermoplastics material is partially melted, the inclined end faces of the respective elongate members are then accurately positioned in opposition and pressed together to effect the right angle welded joint. During this welding operation the material of each of the inner and outer sleeves of the respective members 1 and 1' will become welded, in the plane 7 of Figure 2, to the material of each of the other three sleeves in the corner joint so that a relatively firm and strong joint can be provided.

## Claims

1. A building frame assembly having two elongate members (1, 1') which are jointed together at their ends by a butt weld and in a plane (7) whereby the said members are maintained in a predetermined angular relationship, each said member comprising a thermoplastics outer sleeve (3) and a reinforcement (2) in said outer sleeve, the outer sleeve (3) extending beyond the reinforcement (2) at said end to provide a socket (4), a thermoplastics inner sleeve (5) located in said socket (4), said inner and outer sleeves (3, 5) having substantially coplanar end faces at the said end of their respective elongate member (1, 1'), and the butt weld being effected between the end faces of the thermoplastics sleeves (3, 5) of one member (1) which oppose the end faces of the thermoplastics sleeves (3', 5') of the other member (1'), characterised in that a layer of settable material (6, 6') is provided in the bottom of each socket (4, 4') to seal the end of the reinforcement (2, 2') in that socket and said settable material additionally serves to retain the inner sleeve (5, 5') in its respective socket (4, 4').

2. An assembly as claimed in claim 1 characterised in that the inner sleeves (5, 5') and the outer sleeves (3, 3') are of the same thermoplastics material.

3. An assembly as claimed in either claim 1 or claim 2 characterised in that at least one of the inner and outer sleeves (5, 3) is formed as an extrusion.

4. An assembly as claimed in any one of the preceding claims characterised in that the external profile of each inner sleeve (5) corresponds to the internal profile of the outer sleeve (3) within which it is received and said inner sleeves (5, 5') are received in the respective outer sleeves (3, 3') as substantially complementary fits.

5. An assembly as claimed in any one of the preceding claims characterised in that the inner sleeves (5, 5') have a wall thickness greater than that of the outer sleeves (3, 3').

6. An assembly as claimed in any one of the preceding claims characterised in that the reinforcement (2) is rigid.

7. An assembly as claimed in any one of the preceding claims characterised in that the reinforcement (2) comprises at least one of timber, aluminium, plastics foam and compacted waste material.

8. An assembly as claimed in any one of the preceding claims characterised in that an inner sleeve (5) or each inner sleeve (5, 5') is a tight or interference fit in its associated socket (4, 4').

9. An assembly as claimed in any one of the preceding claims characterised in that the settable material (6) comprises at least one of polyurethane elastomer, hot melt adhesive and RTV silicone rubber.

10. An assembly as claimed in any one of the preceding claims characterised in that each or an inner sleeve (5) abuts the reinforcement (2) at the bottom of the socket (4) within which that inner sleeve is received.

11. An assembly as claimed in any one of the preceding claims characterised in that each of the inner and outer sleeves (3, 5, 3', 5') is welded substantially in said plane (7) to the respective other three of the inner and outer sleeves (3, 5, 3', 5').

12. An assembly as claimed in any one of the preceding claims and in the form of a door or window frame.

13. A method of manufacturing a building frame assembly which comprises forming each of two elongate members (1, 1') by locating a reinforcement (2) in a thermoplastics outer sleeve (3) with an end of the outer sleeve (3) extending beyond the reinforcement (2) to form a socket (4); locating in the socket (4) a thermoplastics inner sleeve (5); cutting the inner and outer sleeves (3, 5) to provide end faces thereon which are substantially coplanar and lie in a plane (7) consistent with a predetermined angular relationship which is to be formed between the two members (1, 1') in the assembly, and welding the end faces of one member (1) in abutting relationship with the end faces of the other member (1') and with the two members in said angular relationship, characterised by providing in the bottom of the socket (4) of each elongate member a layer of settable material (6) to seal the end of the reinforcement (2) in that socket and inserting the inner sleeve (5) into that socket for said inner sleeve to engage the settable material and be retained thereby in the respective socket.

14. A method as claimed in claim 13 characterised by extruding the outer sleeve (3) on to its respective reinforcement (2).

15. A method as claimed in either claim 13 or claim 14 characterised by cutting the outer sleeve (3) to length and displacing the reinforcement (2) longitudinally within that sleeve to provide the required socket (4).

16. A method as claimed in any one of claims 13 to 15 characterised by extruding the inner sleeve (5) for insertion into its respective socket (4).

17. A method as claimed in any one of claims 13 to 16 characterised by forming the inner sleeve (5) with an external profile which corresponds substantially to the internal profile of the outer sleeve (3) within which it is to be received and locating the inner sleeve (5) in the respective outer sleeve (3) as a substantially complementary fit.

18. A method as claimed in any one of claims 13 to 17 characterised by cutting the inner and outer sleeves (3, 5) to provide the substantially coplanar end faces of an elongate member while said inner sleeve (5) is located and retained by the settable material (6) in its associated socket (4) so that the inner and outer sleeves (3, 5) are cut substantially simultaneously.

19. A method as claimed in any one of claims 13 to 18 characterised by locating the inner sleeve (5) in its socket (4) to abut the reinforcement (2).

20. A method as claimed in any one of claims 13 to 19 characterised by additionally retaining the inner sleeve (5) in its respective socket (4) by providing a tight or interference fit therebetween.

21. A method as claimed in any one of claims 13 to 20 characterised by providing the layer of the settable material (6) in the bottom of the socket (4) and inserting the inner sleeve (5) into that socket (4) prior to the material setting so that the inner sleeve (5) dips into the material (6).

22. A method as claimed in any one of claims 13 to 21 characterised by welding the end faces so that each of the inner and outer sleeves (3, 5, 3', 5') is welded substantially in said plane (7) to the respective other three of the inner and outer sleeves (3, 5, 3', 5').

**Patentanspüche**

1. Rahmenbausatz mit zwei länglichen Bauteilen (1, 1'), die an ihren Enden und in einer Ebene (7) durch eine Stoßnaht zusammengefügt sind, wodurch die Bauteile in einer vorbestimmten winkelmäßigen Beziehung gehalten sind, und die jeweils eine thermoplastische Außenhülse (3) und eine Versteifung (2) in der Außenhülse aufweisen, wobei die Außenhülse (3) an dem zugeordneten Ende über die Versteifung (2) vorsteht, um eine Muffe (4) zu schaffen, in welcher eine thermoplastische Innenhülse (5) angeordnet ist, die Innen- und Außenhülsen (3, 5) im wesentlichen koplanare Stirnflächen an dem zugeordneten Ende jedes länglichen Bauteils (1, 1') haben und die Stoßnaht zwischen den Stirnflächen der thermoplastischen Hülsen (3, 5) des einen Bauteils (1) und den gegenüberliegenden Stirnflächen der thermoplastischen Hülsen (3', 5') des anderen Bauteils (1') ausgebildet ist, dadurch gekennzeichnet, daß im Boden jeder Muffe (4, 4') eine Schicht eines verfestigungsfähigen Materials (6, 6') angeordnet ist, um das Ende der Versteifung (2, 2') in der betreffenden Muffe zu versiegeln, und daß das verfestigungsfähige Material noch zusätzlich dazu dient, die Innenhülse (5, 5') in der zugeordneten Muffe (4, 4') zu halten.

2. Bausatz nach Anspruch 1, dadurch gekennzeichnet, daß die Innenhülsen (5, 5') und die Außenhülsen (3, 3') aus demselben thermoplastischen Material bestehen.

3. Bausatz nach Anspruch 1 oder Anspruch 2, dadurch gekennzeichnet, daß wenigstens eine der Innen- und Außenhülsen (3, 5) als ein Strangpreßteil geformt ist.

4. Bausatz nach einem der vorhergehenden Ansprüche, dadurch gekennzeichnet, daß das Außenprofil jeder Innenhülse (5) dem Innenprofil der Außenhülse (3) entspricht, in welcher sie aufgenommen ist, und daß die Innenhülsen (5, 5') in den betreffenden Außenhülsen (3, 3') mit im wesentlichen komplementären Passungen aufgenommen sind.

5. Bausatz nach einem der vorhergehenden Ansprüche, dadurch gekennzeichnet, daß die Innenhülsen (5, 5') eine Wanddicke größer als diejenige der Außenhülsen (3, 3') haben.

6. Bausatz nach einem der vorhergehenden Ansprüche, dadurch gekennzeichnet, daß die Versteifung (2) starr ist.

7. Bausatz nach einem der vorhergehenden Ansprüche, dadurch gekennzeichnet, daß die Versteifung (2) wenigstens eine aus der Gruppe Nutzholz, Aluminium, Kunststoffschaum und verdichtetes Abfallmaterial ist.

8. Bausatz nach einem der vorhergehenden Ansprüche, dadurch gekennzeichnet, daß eine Innenhülse (5) oder jede Innenhülse (5, 5') in der zugeordneten Muffe (4, 4') mit einem Festsitz oder einem Preßsitz angeordnet ist.

9. Bausatz nach einem der vorhergehenden Ansprüche, dadurch gekennzeichnet, daß das verfestigungsfähige Material (6) wenigstens eines aus der Gruppe Polyurethan-Elastomer, Heißschmelzkleber und RTV-Siliziumgummi ist.

10. Bausatz nach einem der vorhergehenden Ansprüche, dadurch gekennzeichnet, daß jede oder eine Innenhülse (5) gegen die Versteifung (2) an dem Boden der Muffe (4) anstößt, innerhalb welcher die Innenhülse aufgenommen ist.

11. Bausatz nach einem der vorhergehenden Ansprüche, dadurch gekennzeichnet, daß jede der Innen- und Außenhülsen (3, 5, 3', 5') im wesentlichen in der besagten Ebene (7) mit den betrefffenden drei anderen Innen- und Außenhülsen (3, 5, 3' 5') verschweißt ist.

12. Bausatz nach einem der vorhergehenden Ansprüche und in der Ausbildung eines Tür- oder Fensterrahmens.

13. Verfahren zum Herstellen eines Rahmenbausatzes, bei dem jedes von zwei länglichen Bauteilen (1, 1') durch Anordnung einer Versteifung (2) in einer thermoplastischen Außenhülse (3) geformt wird, von der ein Ende über die Versteifung vorsteht, um eine Muffe (4) zu bilden; in der Muffe (4) eine thermoplastische Innenhülse (5) angeordnet wird; die Innen- und Außenhülsen (3, 5) zugeschnitten werden, um Stirnflächen zu erhalten, die im wesentlichen koplanar sind und in einer Ebene (7) liegen, welche mit einer vorbestimmten winkelmäßigen Beziehung übereinstimmen, die zwischen den zwei Bauteilen (1, 1') in dem Bausatz zu formen ist; und die Stirnflächen des einen Bauteils (1) mit den Stirnflächen des anderen Bauteils (1') aneinanderstoßend und in der winkelmäßigen Beziehung der zwei Bauteile verschweißt werden, dadurch gekennzeichnet, daß in dem Boden der Muffe (4) jedes länglichen Bauteils eine Schicht eines verfestigungsfähigen Materials (6) angeordnet wird, um das Ende der Versteifung (2) in der Muffe zu versiegeln, und daß die Innenhülse (5) in die dafür vorgesehene Muffe eingesetzt wird, um mit dem verfestigungsfähigen Material zusammenzuwirken und dadurch in der betreffenden Muffe gehalten zu werden.

14. Verfahren nach Anspruch 13, dadurch gekennzeichnet, daß die Außenhülse (3) auf ihre zugeordnete Versteifung (2) stranggepreßt wird.

15. Verfahren nach Anspruch 13 oder 14, dadurch gekennzeichnet, daß die Außenhülse (3) auf Länge zugeschnitten und die Versteifung (2) innerhalb dieser Hülse in Längsrichtung verschoben wird, um die benötigte Muffe (4) bereitzustellen.

16. Verfahren nach einem der Ansprüche 13 bis 15, dadurch gekennzeichnet, daß die Innenhülse (5) für die Einfügung in die zugeordnete Muffe (4) stranggepreßt wird.

17. Verfahren nach einem der Ansprüche 13 bis 16, dadurch gekennzeichnet, daß die Innenhülse (5) mit einem Außenprofil geformt wird, welches im wesentlichen dem Innenprofil der Außenhülse (3) entspricht, innerhalb welcher sie aufgenommen wird, und daß die Innenhülse (5) in der zugeordneten Außenhülse (3) mit einer im wesentlichen komplementären Passung angeordnet wird.

18. Verfahren nach einem der Ansprüche 13 bis 17, dadurch gekennzeichnet, daß die Innen- und Außenhülsen (3, 5) zur Bereitstellung der im wesentlichen koplanaren Stirnflächen an einem länglichen Bauteil zugeschnitten werden, während die Innenhülse (5) in ihrer zugeordneten Muffe (4) angeordnet und durch das verfestigungsfähige Material (6) gehalten ist, so daß die Innen- und Außenhülsen (3, 5) im wesentlichen gleichzeitig zugeschnitten werden.

19. Verfahren nach einem der Ansprüche 13 bis 18, dadurch gekennzeichnet, daß die Innenhülse (5) in ihrer Muffe (4) für ein Anstoßen an der Versteifung (2) angeordnet wird.

20. Verfahren nach einem der Ansprüche 13 bis 19, dadurch gekennzeichnet, daß die Innenhülse (5) in ihrer zugeordneten Muffe (4) zusätzlich gehalten wird, indem zwischen beiden ein Festsitz oder ein Preßsitz geschaffen wird.

21. Verfahren nach einem der Ansprüche 13 bis 20, dadurch gekennzeichnet, daß die Schicht des verfestigungsfähigen Materials (6) in dem Boden der Muffe (4) angeordnet und die Innenhülse (5) in diese Muffe (4) noch vor der Verfestigung des Materials eingesetzt wird, so daß die Innenhülse (5) in das Material (6) eintaucht.

22. Verfahren nach einem der Ansprüche 13 bis 21, dadurch gekennzeichnet, daß die Stirnflächen derart miteinander verschweißt werden, daß jede der Innen und Außenhülsen (3, 5, 3', 5') im wesentlichen in der besagten Ebene (7) mit den betreffenden drei anderen Innen- und Außenhülsen (3, 5, 3', 5') verschweißt ist.

## Revendications

1. Ensemble de cadre utilisable en construction, comportant deux éléments allongés (1, 1') assemblés à leurs extrémités par une soudure bout à bout dans un plan (7) de façon que ces éléments soient maintenus dans une disposition angulaire prédéterminée, chacun de ces éléments comprenant un manchon extérieur en matière thermoplastique (3) et un renforcement (2) dans ce manchon extérieur, le manchon extérieur (3) dépassant au-delà du renforcement (2) à l'extrémité ci-dessus pour former une cavité (4), un manchon intérieur en matière thermoplastique (5) placé dans la cavité (4), les manchons intérieur et extérieur (3, 5) comportant des faces d'extrémité parfaitement coplanaires aux extrémités ci-dessus de leurs éléments allongés respectivement (1, 1'), et la soudure bout à bout étant effectuée entre les faces d'extrémité des manchons de matière thermoplastique (3, 5) d'un élément (1) qui s'opposent aux faces d'extrémité des manchons de matière thermoplastique (3', 5') de l'autre élément (1'), ensemble caractérisé en ce qu'une couche d'un matériau durcissable (6, 6') est utilisée dans le fond de chaque cavité (4, 4') pour sceller l'extrémité du renforcement (2, 2') dans cette cavité, et en ce que le matériau durcissable sert en outre à maintenir le manchon intérieur (5, 5') dans sa cavité correspondante (4, 4').

2. Ensemble selon la revendication 1, caractérisé en ce que les manchons intérieurs (5, 5') et les manchons extérieurs (3, 3') sont réalisés dans la même matière thermoplastique.

3. Ensemble selon l'une quelconque des revendications 1 et 2, caractérisé en ce que l'un au moins des manchons intérieur et extérieur (5, 3) est réalisé sous la forme d'une extrusion.

4. Ensemble selon l'une quelconque des revendications précédentes, caractérisé en ce que le profil extérieur de chaque manchon intérieur (5) correspond au profil intérieur du manchon extérieur (3) à l'intérieur duquel il est placé, et en ce que les manchons intérieurs (5, 5') sont placés dans les manchons extérieurs respectifs (3, 3') par des emboîtements essentiellement complémentaires.

5. Ensemble selon l'une quelconque des revendications précédentes, caractérisé en ce que les manchons intérieurs (5, 5') ont une épaisseur de paroi supérieure à celle des manchons extérieurs (3, 3').

6. Ensemble selon l'une quelconque des revendications précédentes, caractérisé en ce que le renforcement (2) est rigide.

7. Ensemble selon l'une quelconque des revendications précédentes, caractérisé en ce que le renforcement (2) est constitué par l'un au moins des éléments comprenant une poutre, de l'aluminium, de la mousse de matière plastique, et des matériaux de déchets compactés.

8. Ensemble selon l'une quelconque des revendications précédentes, caractérisé en ce qu'un manchon intérieur (5) ou chaque manchon intérieur (5, 5') est emboîté par un emboîtement serré ou en force dans sa cavité associée (4, 4').

9. Ensemble selon l'une quelconque des revendications précédentes, caractérisé en ce que le matériau durcissable (6) est constitué par l'un au moins des éléments comprenant un élastomère de polyuréthane, une colle à fusion à chaud, et un caoutchouc silicone vulcanisable à la température ambiante.

10. Ensemble selon l'une quelconque des revendications précédentes, caractérisé en ce que chacun ou l'un des manchons intérieurs (5) vient buter contre le renforcement (2) dans le fond de la cavité (4) à l'intérieur de laquelle ce manchon intérieur vient se loger.

11. Ensemble selon l'une quelconque des revendications précédentes, caractérisé en ce que chacun des manchons intérieurs et extérieurs (3, 5, 3', 5') est soudé exactement dans le plan (7) aux trois autres manchons intérieurs et extérieurs respectifs (3, 5, 3', 5').

12. Ensemble selon l'une quelconque des revendications précédentes, caractérisé en ce qu'il se présente sous la forme d'un chassis de porte ou de fenêtre.

13. Procédé de fabrication d'un ensemble de cadre utilisable en construction, comprenant les différentes étapes consistant à former chacun de deux éléments allongés (1, 1') en plaçant un renforcement (2) dans un manchon extérieur de matière thermoplastique (3) de façon qu'une extrémité du manchon extérieur (3) dépasse au-delà du renforcement (2) pour former une cavité (4); à placer dans la cavité (4) un manchon intérieur de matière thermoplastique (5); à couper les manchons intérieur et extérieur (3, 5) pour former sur ceux-ci des faces d'extrémité essentiellement coplanaires et se situant dans un plan (7) correspondant à une relation angulaire prédéterminée devant être formée entre les deux éléments (1, 1') de l'ensemble, et à souder les faces d'extrémité d'un élément (1) en contact de butée contre les faces d'extrémité de l'autre élément (1') de façon que les deux éléments soient dans la disposition angulaire ci-dessus, procédé caractérisé en ce qu'il consiste à placer dans le fond de la cavité (4) de chaque élément allongé une couche d'un matériau durcissable (6) pour sceller l'extrémité du renforcement (2) dans cette cavité, et à introduire le manchon intérieur (5) dans cette cavité de façon que le manchon intérieur s'engage contre le matériau durcissable et soit maintenu par celui-ci dans la cavité correspondante.

14. Procédé selon la revendication 13, caractérisé en ce qu'il consiste à extruder le manchon extérieur (3) sur son renforcement respectif (2).

15. Procédé selon l'une quelconque des revendications 13 et 14, caractérisé en ce qu'il consiste à couper le manchon extérieur (3) à la bonne longueur et à déplacer le renforcement (2) dans le sens longitudinal à l'intérieur de ce manchon pour obtenir la cavité (4) requise.

16. Procédé selon l'une quelconque des revendications 13 à 15, caractérisé en ce qu'il consiste à extruder le manchon intérieur (5) pour l'introduire dans sa cavité (4) respective.

17. Procédé selon l'une quelconque des revendications 13 à 16, caractérisé en ce qu'il consiste à donner au manchon intérieur (5) un profil extérieur correspondant exactement au profil intérieur du manchon extérieur (3) à l'intérieur duquel il doit venir se loger, et à placer le manchon intérieur (5) dans le manchon extérieur (3) correspondant en former un emboîtement essentiellement complémentaire.

18. Procédé selon l'une quelconque des revendications 13 à 17, caractérisé en ce qu'il consiste à couper les manchons intérieur et extérieur (3, 5) pour former les faces d'extrémité essentiellement coplanaires d'un élément allongé tandis que le manchon intérieur (5) est placé et maintenu par le matériau durcissable (6) dans sa cavité (4) associée, de façon que les manchons intérieur et extérieur (3, 5) soient coupés essentiellement simultanément.

19. Procédé selon l'une quelconque des revendications 13 à 18, caractérisé en ce qu'il consiste à placer le manchon intérieur (5) dans sa cavité (4) de façon qu'il vienne buter contre le renforcement (2).

20. Procédé selon l'une quelconque des revendications 13 à 19, caractérisé en ce qu'il consiste à maintenir en outre le manchon intérieur (5) dans sa cavité (4) correspondante en utilisant un emboîtement serré ou en force entre les deux.

21. Procédé selon l'une quelconque des revendications 13 à 20, caractérisé en ce qu'il consiste à placer la couche de matériau durcissable (6) dans le fond de la cavité (4) et à introduire le manchon intérieur (5) dans cette cavité (4) avant que le matériau ait pris de façon que le manchon intérieur (5) plonge dans le matériau (6).

22. Procédé selon l'une quelconque des revendications 13 à 21, caractérisé en ce qu'il consiste à souder les faces d'extrémité de façon que chacun des manchons intérieur et extérieur (3, 5, 3', 5') soit soudé exactement dans le plan (7) aux trois autres manchons intérieurs et extérieurs (3, 5, 3', 5').

EP 0 235 442 B1

FIG.1.

FIG.2.